(19) Europäisches Patentamt
European Patent Office
Office européen des brevets

(11) Numéro de publication : 0 292 407 B1

# (12) FASCICULE DE BREVET EUROPEEN

(45) Date de publication du fascicule du brevet : 31.07.91 Bulletin 91/31

(51) Int. Cl.$^5$ : C08G 77/32, C08G 77/16, C08G 77/08

(21) Numéro de dépôt : 88420115.3

(22) Date de dépôt : 07.04.88

## (54) Procédé de préparation de polydiorganosiloxane à extrémités silanol.

(30) Priorité : 16.04.87 FR 8705645

(43) Date de publication de la demande : 23.11.88 Bulletin 88/47

(45) Mention de la délivrance du brevet : 31.07.91 Bulletin 91/31

(84) Etats contractants désignés : AT BE CH DE ES FR GB GR IT LI LU NL SE

(56) Documents cités :
EP-A- 0 208 285
GB-A- 1 325 654
US-A- 4 448 927
US-A- 4 563 513

(73) Titulaire : RHONE-POULENC CHIMIE
25, quai Paul Doumer
F-92408 Courbevoie Cédex (FR)

(72) Inventeur : Billet, Lucien
31, Domaine des Cèdres Rue de la Maçonnière
F-69390 Vernaison (FR)
Inventeur : Lebrun, Jean-Jacques
24, rue Pierre Brunier
F-69300 Caluire (FR)

(74) Mandataire : Seugnet, Jean Louis et al
RHONE-POULENC INTERSERVICES Service Brevets Chimie Centre de Recherches des Carrières B.P. 62
F-69192 Saint-Fons Cédex (FR)

EP 0 292 407 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de préparation de polydiorganosiloxane à extrémités silanol par réaction de polycondensation.

Il est bien connu de polycondenser les silanols portés par des silanes et/ou des diorganopolysiloxanes en présence de composés variés qui accélèrent la polycondensation en jouant le rôle d'agents de déshydratation ou de catalyseur (voir l'ouvrage de Walter NOLL, Chemistry and Technology of Silicones ; édition 1968 en langue anglaise Academic Press, pages 209 à 218).

Par le brevet américain US-A-2961245 il est connu de polymériser en masse par ouverture de cycle des cyclotrisiloxanes à radicaux hydrocarbonés fluorés (1) en présence d'acide perfluoroalcanesulfoniques (3) et de polydiorganosiloxane à extrémités triorganosiloxy (2) (essentiellement l'hexaméthyldisiloxane) comme agent bloqueur de chaîne.

On obtient ainsi après dévolatilisation une huile silicone fluorée dont la viscosité est essentiellement réglée par le rapport du siloxane (2) au siloxane (1), le catalyseur (3) étant éventuellement éliminé par distillation ou lavage.

Par le brevet US-A-3308203 il est connu de polycondenser dans un solvant organique, un mélange de polyorganosiloxane linéaires et ramifiés porteurs de fonctions silanol en présence d'un catalyseur qui peut être, entre autres, un acide perfluoroalcanesulfonique ou l'acide p-toluènesulfonique. Le solvant doit être éliminé du mélange réactionnel et, dans le cas où l'acide p-toluène sulfonique est utilisé (exemple 4), il est désactivé par addition de LiOH et le sel formé est éliminé par filtration.

Le brevet britannique GB-A-1325654 enseigne la polymérisation, en présence d'un acide perfluoroalcanesulfonique et de silice, de polysiloxanes cycliques éventuellement en mélange avec des diorganopolysiloxanes linéaires bloqueurs de chaîne. En fin de réaction le catalyseur peut être neutralisé par l'hexaméthyldisilazane.

Le brevet américain US-A-4448927 (& EP-A-120645) décrit la polymérisation, en présence de charge (silice ou noir de carbone), d'oligomères siloxanes linéaires $HO(R_2SiO)_nH$ et/ou cycliques $(R_2SiO)_y$, pouvant contenir en outre des polydiorganosiloxanes bloqueurs de chaîne. A l'exemple 3, on décrit la polymérisation de polydiorganosiloxane à extrémités silanol en présence de charge et d'acide trifluorométhanesulfonique désactivé en fin de réaction par MgO.

Des procédés analogues de polymérisation sur charge sont également décrits dans les brevets européens EP-A-119816 et EP-A 119817.

Enfin dans le brevet européen EP-A-133975 on décrit la polycondensation en milieu solvant de polydiorganosiloxanes à fonctions silanol linéaires et ramifiés en utilisant un système catalytique constitué par un acide libre, dont en particulier un acide perfluoroalcanesulfonique et son sel d'amine.

Un but de la présente invention est de proposer un procédé de préparation de polydiorganosiloxanes à extrémités silanol par polycondensation de polydiorganosiloxane à extrémités silanol qui soit sensiblement exempt de produits polysiloxanes volatils, ces volatils étant essentiellement constitués, en plus de la formation inhérente d'eau, par des cyclosiloxanes et/ou des polydiorganosiloxanes de faible masse molaire.

Un autre but de la présente invention est de proposer un procédé de préparation du type ci-dessus, selon lequel on peut règler avec précision le degré de polymérisation souhaité sans que ce procédé nécessite une étape supplémentaire telle que filtration, dévolatilisation en vue d'éliminer le catalyseur sous une forme active ou désactivée.

Un autre but de la présente invention est de proposer un procédé de préparation du type ci-dessus qui permette, à partir de matières premières facilement disponibles, d'obtenir des polydiorganosiloxanes à extrémités silanol de viscosités très diverses allant des huiles aux gommes, en utilisant des quantités très faibles de catalyseur.

Un autre but de la présente invention est de proposer un procédé de préparation du type ci-dessus qui ne fasse intervenir que des réactions de polycondensation, sans réactions parasites de cyclisation et de coupure de chaînes engendrant des polydiorganosiloxanes volatils linéaires ou cycliques qu'il serait nécessaire d'éliminer par dévolatilisation.

Ces buts et d'autres sont atteints par la présente invention qui concerne en effet un procédé de préparation de polydiorganosiloxane à extrémités silanol, caractérisé en ce qu'on polycondense en masse dans une enceinte fermée des oligomères de polydiorganosiloxane à extrémités silanol en présence d'une quantité catalytiquement efficace d'acide trifluorométhanesulfonique à une température comprise entre 20 et 160°C, de préférence entre 50 et 130°C avec élimination continue de l'eau formée et en ce qu'on arrête la réaction de polycondensation par addition d'une quantité adaptée d'un polydiorganosilazane choisi parmi les cyclopolydiorganosilazanes et les polydiorganosilazanes à extrémités diorganoaminosilyle, pour neutraliser le catalyseur.

Dans ce qui suit ou ce qui précède, sauf mentions contraires, les pourcentages et parties sont en poids.

Les oligomères de polydiorganosiloxane de départ sont des matières premières bien connues de l'industrie des silicones et proviennent de l'hydrolyse de diorganodichlorosilane, généralement du diméthyldichlorosilane.

Au cours de cette réaction d'hydrolyse, on obtient un mélange d'oligomères linéaires et cycliques dont les proportions relatives dépendent des conditions de l'hydrolyse.

Selon le procédé de l'invention on utilise, comme produits de départ, des oligomères linéaires sensiblement exempts d'oligomères cycliques, ces derniers ayant donc été éliminés au préalable par tout moyen convenable, par exemple par distillation.

Le fait que les produits de départ soient sensiblement exempts de cyclosiloxanes cycliques volatils permet d'aboutir directement au polymère de viscosité visée sans avoir besoin de dévolatiliser, étant donné que l'acide trifluorométhanesulfonique, dans les conditions spécifiques de la présente invention, ne favorise que les réactions de polycondensation et ne catalyse pas les réactions de cyclisation et de coupure des chaînons siloxanes (la teneur en catalyseur et la température de polycondensation).

Par ailleurs, comme la réaction est effectuée en masse, il n'est pas nécessaire d'éliminer le solvant en fin de réaction.

Les oligomères polydiorganosiloxane à extrémités silanol répondent à la formule générale :

$$HO(R_2\,SiO)_nH \quad (1)$$

dans laquelle R est choisi parmi un atome d'hydrogène et les radicaux méthyle, éthyle, propyle, phényle, vinyle, allyle et trifluoro-3,3,3 propyle et n est un nombre entier compris entre 3 et 300 inclus, de préférence entre 10 et 100, ou bien n est choisi de telle sorte qu'il confère à l'oligomère une viscosité comprise entre 50 et 150 mPa · s à 25°C, quand R est un méthyle.

En effet dans les produits industriels de base, comme indiqué plus haut, R est un radical méthyle et les oligomères linéaires de formule (1) à la sortie de l'étape d'hydrolyse présentent une viscosité généralement comprise entre 50 et 150 mPa · s à 25°C ce qui correspond à la formule (1) avec R = méthyle et n compris entre environ 3 et 100 atomes de silicium.

Pour arrêter la réaction de polycondensation il suffit, conformément à l'invention d'ajouter au milieu réactionnel une quantité adaptée de polydiorganosilazane, linéaire ou cyclique, suffisante pour neutraliser la quantité d'acide trifluorométhanesulfonique intialement introduite.

Le cyclopolydiorganosilazane répond à la formule générale :

$$(R_2\,Si\,NH)_m \quad (2)$$

dans laquelle les radicaux R, identiques ou différents, ont la même signification qu'à la formule (1) ci-dessus et m est un nombre entier compris entre 3 et 10 inclus.

Les cyclopolydiorganosilazanes sont des produits bien connus dont le procédé de préparation fait intervenir l'ammonolyse d'un diorganodichlorosilane. Ce procédé est en particulier décrit dans le brevet britannique GB-A-881178. D'autres procédés sont également décrits ou cités aux pages 349 à 352 de l'ouvrage de Walter NOLL précité.

Pour des raisons de facilité d'accès et de mise en oeuvre, on utilise de préférence les cyclopolydiorganosilazanes liquides à température ambiante en particulier ceux pour lesquels m est 3 ou 5, et R est un méthyle à savoir le cyclotri(diméthyl)silazane dénommé également hexaméthylcyclotrisilazane et le cyclopenta(diméthyl)dilazane dénommé également décaméthylcyclopentasilazane. Les silazanes à l'état solide à température ambiante (20°C) sont également utilisables en solution dans un solvant organique.

Les polydiorganosilazanes à extrémités diorganoaminosilyle répondent à la formule générale :

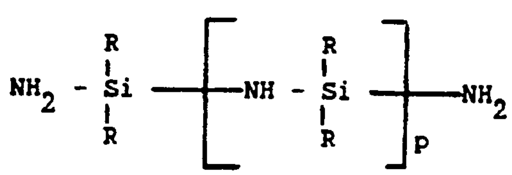

(3)

dans laquelle les radicaux R, identiques ou différents, ont la même signification qu'à la formule (1) ci-dessus et p est un nombre entier compris entre 1 et 100.

Les polysilazanes de formule (3) sont des produits connus qui peuvent être obtenus en particulier par ouverture de cycle et polymérisation des cyclopolydiorganosilazanes de formule (2). D'autres procédés sont

également décrits ou cités à la page 351 de l'ouvrage de Walter NOLL précité.

On utilise de préférence les polydiorganosilazanes de formule (3) qui sont liquides à température ambiante (20°C). Les polydiorganosilazanes solides à température ambiante sont utilisables en solution dans un solvant organique.

On a en effet découvert conformément à l'invention que le polydiorganosilazane de formules (2) ou (3) ci-dessus neutralise instantanément l'acide trifluorométhanesulfonique, ce qui arrête immédiatement la réaction de polycondensation et permet de conserver intactes les extrémités silanols du polydiorganosiloxane formé. Un tel résultat ne peut être obtenu avec des polysilazanes linéaires à extrémités triorganosilyle, tel que l'hexaméthyldisilazane, qui neutralise certes l'acide trifluorométhanesulfonique mais joue également le rôle d'agent bloqueur en substituant une partie des extrémités silanol du polydiorganosiloxane formé par des extrémités triméthylsiloxy.

Par ailleurs, et ceci constitue un des avantages majeurs de l'utilisation de polydiorganosilazanes de formules (2) ou (3), le catalyseur désactivé peut rester au sein du polymère formé sans inconvénient d'aucune sorte pour ce polymère.

La réaction de polycondensation s'effectue dans une enceinte fermée, qui est de préférence un réacteur comportant un couvercle et des ouvertures pouvant être obturées. Par ailleurs le réacteur est muni d'un agitateur relié à un appareil permettant de mesurer en continu la viscosité du mélange réactionnel. Le réacteur comporte un capteur de pression régnant dans l'atmosphère de l'enceinte fermée située au-dessus du mélange réactionnel.

Le réacteur est muni d'un moyen de chauffage et d'une seringue d'injection du catalyseur et du polydiorganosilazane.

Le réacteur est également équipé de moyens permettant d'établir une purge par un gaz inerte sec généralement l'azote et/ou de moyens permettant d'établir une pression réduite régnant dans l'atmosphère de l'enceinte fermée dans le but d'éliminer les volatils et en particulier l'eau.

La réaction de polycondensation peut être avantageusement mise en oeuvre de la façon suivante :

On introduit dans le réacteur l'oligomère que l'on dégaze éventuellement à chaud (70 à 200°C) sous une pression réduite généralement comprise entre 0,133 et 10 KPa suivant une durée qui dépend de la qualité du vide. Cette durée peut être de 30 minutes sous une pression de 3 KPa. Cette dévolatilisation permet d'éliminer l'eau présente dans l'oligomère de départ.

Les oligomères éventuellement séchés sont maintenus sous agitation et à une température de 20-160°C, de préférence 50-130°C, on ajoute de 5 à 300, de préférence de 10 à 100 parties en poids d'acide trifluorométhanesulfonique par million de parties d'oligomères, tout en éliminant en continu l'eau formée par la polycondensation. Cette élimination de l'eau peut être réalisée par tout moyen convenable, comme indiqué plus haut, notamment par balayage par un gaz inerte sec (l'azote) en établissant une pression réduite dans l'enceinte par aspiration ou par une combinaison de ces moyens.

Durant l'étape de polycondensation on maintient la température entre 20-160°C, de préférence entre 50-130°C. Si on opère à une température inférieure à la température ambiante (20°C) la cinétique de la réaction de polycondensation est trop lente. Par contre si on opère à une température supérieure à environ 160°C, il se forme des oligomères cycliques volatils. Dès que la masse réactionnelle atteint la viscosité désirée, on arrête instantanément la polycondensation en ajoutant une quantité de polydiorganosilazanes suffisante pour neutraliser le catalyseur. On utilise en général de 0,5 à 50 parties de polydiorganosilazanes par partie de catalyseur initialement introduite, de préférence de 1 à 10 parties.

Le polymère obtenu ne contient sensiblement pas de cyclopolysiloxanes volatils (en général moins de 2%) et présente des extrémités de chaîne à fonctions silanol.

Les huiles ou les gommes formées sont directement utilisables pour être incorporées par exemple dans les compositions élastomères silicones durcissant à froid ou à chaud.

D'autres avantages et caractéristiques de la présente invention apparaîtront à la lecture des exemples suivants donnés à titre illustratif nullement limitatif.

— EXEMPLE 1 :

Dans un réacteur de 500 $cm^3$ muni de moyen de chauffage (double enveloppe), de moyens pour faire le vide, d'un agitateur relié à un dispositif permettant de mesurer instantanément la viscosité du mélange réactionnel, d'une seringue de coulée et de moyens permettant une couverture ou un balayage à l'azote, on introduit 300 g d'oligomère polydiméthylsiloxane à extrémités silanol, de viscosité 100 mPa · s à 25°C contenant 1,7% de volatils.

Le mélange réactionnel est maintenu pendant 20 minutes sous une pression réduite de 2,7 KPa sous agitation (120 tours/minute).

Le vide est alors cassé (remise à la pression atmosphérique) sous couverture (atmosphère) à l'azote et on élève la température à 110°C. On introduit 4,4 µl d'acide trifluorométhanesulfonique (soit 25 ppm), de pureté supérieure à 98%. On rétablit immédiatement une pression réduite de 2,7 KPa et l'agitation (120 tours/minute). Instantanément la viscosité augmente. 10 minutes après l'introduction du catalyseur la viscosité mesurée du mélange réactionnel est de 200000 mPa · s à 25°C. La réaction est stoppée par addition de 50 mg d'hexaméthylcyclotrisilazane.

La désactivation est instantanée car le polymère obtenu a bien une viscosité de 205000 mPa · s à 25°C et un taux de volatils de 1,8% en poids dosés par microdévolatilisation. La microdévolatilisation consiste à introduire 2 g de polymère dans une coupe en aluminium que l'on porte à 175°C durant deux heures sous une pression réduite de 0,06 KPa. Après refroidissement la coupe est pesée ce qui permet d'évaluer les pertes, donc les volatils.

La teneur en fonction silanol du polymère déterminée par infra-rouge est de 335 ppm (parties par million).

— EXEMPLE 2 :

On répète exactement le mode opératoire de l'exemple 1 sauf que la température du mélange réactionnel est de 80°C. On obtient, après 25 minutes de polycondensation, une huile de viscosité 60000 mPa · s à 25°C, un taux de volatils de 1,5% et une teneur en fonctions silanol de 650 ppm.

— EXEMPLES 3 A 5 :

On répète exactement le mode opératoire de l'exemple 1 sauf que l'on fait varier la durée de la polycondensation.

Les résultats obtenus sont rassemblés dans le tableau ci-après :

| Exemples | Durée (minutes) | Viscosité mPa.s à 25 °C | Volatils % |
|---|---|---|---|
| 3 | 8 | 126 000 | 1,76 |
| 4 | 9 | 158 000 | 1,73 |
| 5 | 25 | gomme | - |

**Revendications**

1. Procédé de préparation de polydiorganosiloxane à extrémités silanol, caractérisé en ce qu'on polycondense en masse, dans une enceinte fermée, des oligomères de polydiorganosiloxanes à extrémités silanol en présence d'une quantité catalytiquement efficace d'acide trifluorométhanesulfonique à une température comprise entre 20 et 160°C avec élimination continue de l'eau formée et en ce qu'on arrête la réaction de polycondensation par addition d'une quantité adaptée d'un polydiorganosilazane choisi parmi les cyclopolydiorganosilazanes et les polydiorganosilazanes à extrémités diorganoaminosilyle, pour neutraliser le catalyseur.

2. Procédé selon la revendication 1, caractérisé en ce qu'on utilise de 5 à 300 parties en poids d'acide trifluorométhanesulfonique par million de parties d'oligomères et en ce que la température de polycondensation est comprise entre 50 et 130°C.

3. Procédé selon la revendication 1 ou 2, caractérisé en ce que l'élimination continue de l'eau est réalisée par un moyen choisi parmi un balayage par un gaz inerte, par l'établissement d'une pression réduite dans l'enceinte et par une combinaison de ces deux moyens.

4. Procédé selon l'une quelconque des revendications précédentes, caractérisé en ce qu'on additionne

de 0,5 à 50 parties de polydiorganopolysilazanes par parties d'acide trifluorométhanesulfonique.

5. Procédé selon l'une quelconque des revendications précédentes, caractérisé en ce que l'oligomère chargé préalablement dévolatilisé répond à la formule générale :

$$HO(R_2\,SiO)_nH \quad (1)$$

dans laquelle R est choisi parmi les radicaux méthyle, éthyle, propyle, phényle, vinyle, allyle et trifluoro-3,3,3 propyle et n est un nombre entier compris entre 3 et 100 inclus.

6. Procédé selon la revendication 5, caractérisé en ce que R est méthyle et n est choisi pour conférer à l'oligomère une viscosité comprise entre 50 et 150 mPa · s à 25°C.

7. Procédé selon l'une quelconque des revendications précédentes, caractérisé en ce que les cyclopolydiorganosilazanes répondent à la formule générale :

$$(R_2\,Si\,NH)_m \quad (2)$$

dans laquelle les radicaux R, identiques ou différents, sont choisis parmi les radicaux méthyle, éthyle, propyle, phényle, vinyle, allyle et trifluoro-3,3,3 propyle et m est un nombre entier compris entre 3 et 10 inclus.

8. Procédé selon la revendication 7, caractérisé en ce que le produit de formule (2) est l'hexaméthylcyclotrisilazane ou le décaméthylcyclopentasilazane.

9. Procédé selon l'une quelconque des revendications 1 à 6, caractérisé en ce que les polydiorganosilazanes à extrémités diorganoaminosilyle répondent à la formule générale :

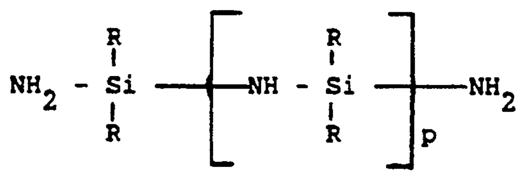

(3)

dans laquelle les radicaux R, identiques ou différents, ont la même signification qu'à la formule (1) ci-dessus et p est un nombre entier compris entre 1 et 100.

## Claims

1. Process for preparing polydiorganosiloxane having silanol end groups, characterised in that the bulk polycondensation of polydiorganosiloxane oligomers having silanol end groups is carried out in a closed chamber in the presence of a catalytically effective amount of trifluoromethanesulphonic acid at a temperature of between 20 and 160°C, with the continuous removal of the water formed, and in that the polycondensation reaction is stopped by adding a suitable amount of a polydiorganosilazane chosen from cyclopolydiorganosilazanes and polydiorganosilazanes having diorganoaminosilyl end groups, to neutralise the catalyst.

2. Process according to claim 1, characterised in that from 5 to 300 parts by weight of trifluoromethanesulphonic acid per million parts of oligomers are used, and in that the polycondensation temperature is between 50 and 130°C.

3. Process according to claim 1 or 2, characterised in that the continuous removal of water is carried out by a means chosen from flushing with an inert gas, establishing a reduced pressure in the chamber and a combination of these two means.

4. Process according to any one of the preceding claims, characterised in that from 0.5 to 50 parts of polydiorganopolysilazanes per part of trifluoromethanesulphonic acid are added.

5. Process according to any one of the preceding claims, characterised in that the previously devolatilised oligomer introduced corresponds to the general formula :

$$HO(R_2\,SiO)_nH \quad (1)$$

in which R is chosen from methyl, ethyl, propyl, phenyl, vinyl, allyl and 3,3,3-trifluoropropyl radicals and n is an integer between 3 and 100 inclusive.

6. Process according to claim 5, characterised in that R is methyl and n is chosen so as to impart to the

oligomer a viscosity of between 50 and 150 mPa · s at 25°C.

7. Process according to any one of the preceding claims, characterised in that the cyclopolydiorganosilazanes correspond to the general formula :

$$(R_2\,Si\,NH)_n \quad (2)$$

in which the radicals R, which may be identical or different, are chosen from methyl, ethyl, propyl, phenyl, vinyl, allyl and 3,3,3-trifluoropropyl radicals and m is an integer between 3 and 10 inclusive.

8. Process according to claim 7, characterised in that the product of formula (2) is hexamethylcyclotrisilazane or decamethylcyclopentasilazane.

9. Process according to any one of claims 1 to 6, characterised in that the polydiorganosilazanes having diorganoaminosilyl end groups correspond to the general formula :

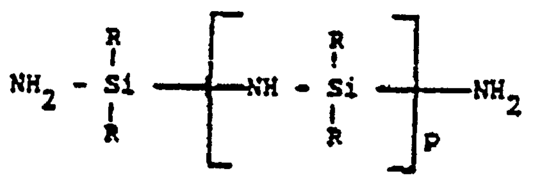

(3)

in which the radicals R, which may be identical or different, have the same meaning as in the formula (1) above and p is an integer between 1 and 100.

## Patentansprüche

1. Verfahren zur Herstellung von Polydiorganosiloxanen mit Silanol-Endgruppen, dadurch gekennzeichnet, daß man in der Masse in einem geschlossenen Behälter Polydiorganosiloxanoligomere mit Silanol-Endgruppen in Gegenwart einer katalytisch wirksamen Menge an Trifluormethansulfonsäure bei einer Temperatur zwischen 20 und 160°C unter kontinuierlicher Entfernung des gebildeten Wassers polykondensiert und die Polykondensationsreaktion durch Zugabe einer geeigneten Menge eines Polydiorganosilazans, ausgewählt unter den Cyclopolydiorganosilazanen und den Polydiorganosilazanen mit Diorganoaminosilyl-Endgruppen, um den Katalysator zu neutralisieren, abbricht.

2. Verfahren gemäß Anspruch 1, dadurch gekennzeichnet, daß man 5 bis 300 Gew. Teile Trifluormethansulfonsäure je Million Teile Oligomere verwendet und daß die Polykondensationstemperatur swischen 50 und 130°C liegt.

3. Verfahren gemäß Anspruch 1 oder 2, dadurch gekennzeichnet, daß die kontinuierliche Entfernung des Wassers durchgeführt wird mit einem Mittel, ausgewählt unter dem Spülen mit einem Inertgas, der Errichtung eines verminderten Drucks in dem Behäter und einer Kombination dieser beiden Mittel.

4. Verfahren gemäß einem der vorhergehenden Ansprüche, dadurch gekennzeichnet, daß man 0,5 bis 50 Teile Polydiorganopolysilazane je Teil Trifluormethansulfonsäure zugibt.

5. Verfahren gemäß einem der vorhergehenden Ansprüche, dadurch gekennzeichnet, daß das zuvor einer Verflüchtigung unterzogene, zugeführte Oligomere der allgemeinen Formel

$$HO(R_2\,SiO)_nH \quad (1)$$

entspricht, worin R ausgewählt ist unter den Methyl-, Ethyl-, Propyl-, Phenyl-, Vinyl-, Allyl- und 3,3,3-Trifluorpropylresten und n eine ganze Zahl von 1 bis einschließlich 100 wiedergibt.

6. Verfahren gemäß Anspruch 5, dadurch gekennzeichnet, daß R Methyl bedeutet und n derart ausgewählt ist, daß dem Oligomeren eine Viskosität zwischen 50 und 150 mPa · s bei 25°C verliehen wird.

7.Verfahren gemäß einem der vorhergehenden Ansprüche, dadurch gekennzeichnet, daß die Cyclopolydiorganosilazane der allgemeinen Formel

$$(R_2\,Si\,NH)_m \quad (2)$$

entsprechen, worin die Reste R, die gleich oder verschieden sind, unter den Methyl-, Ethyl-, Propyl-, Phenyl-, Vinyl-, Allyl- und 3,3,3-Trifluorpropylresten ausgewählt sind und m eine ganze Zahl zwischen 3 und 10 einschließlich bedeutet.

8. Verfahren gemäß Anspruch 7, dadurch gekennzeichnet, daß das Produkt der Formel (2) Hexamethylcyclotrisilazan oder Decamethylcyclopentasilazan ist.

9. Verfahren gemäß einem der Ansprüche 1 bis 6, dadurch gekennzeichnet, daß die Polydiorganosilazane mit Diorganoaminosilyl-Endgruppen der allgemeinen Formel

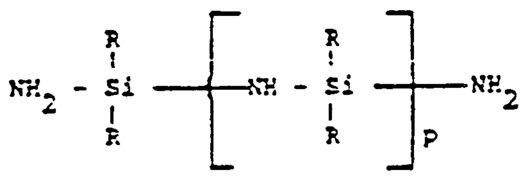

(3)

entsprechen, worin die Reste R, die gleich oder voneinander verschieden sind, die für die vorstehende Formel (1) angegebene Bedeutung besitzen und p eine ganze Zahl zwischen 1 und 100 ist.